# EUROPÄISCHE PATENTSCHRIFT

(11) **EP 3 541 652 B1**
(45) Veröffentlichungstag und Bekanntmachung des Hinweises auf die Patenterteilung: **21.02.2024**
(21) Anmeldenummer: 17801039.3
(22) Anmeldetag: 20.11.2017
(51) Int. Cl.: B60L 9/00, B61C 3/02, B60L 50/53

(54) **ELEKTRISCHES NETZWERK FÜR EIN SCHIENENFAHRZEUG, SCHIENENFAHRZEUG UND VERFAHREN ZUM BETRIEB EINES ELEKTRISCHEN NETZWERKS**
POWER NETWORK VOR A RAIL VEHICLE, RAIL VEHICLE AND METHOD OF OPERATING A POWER NETWORK
RÉSEAU ÉLECTRIQUE POUR UN VÉHICULE FERROVIAIRE, VÉHICULE FERROVIAIRE ET PROCÉDÉ D'EXPLOITATION D'UN RÉSEAU ÉLECTRIQUE

(30) Priorität: 21.11.2016 DE 102016222856
(43) Veröffentlichungstag der Anmeldung: 25.09.2019
(73) Patentinhaber: ALSTOM Holdings, 93400 Saint-Ouen-sur-Seine (FR)
(72) Erfinder: STICKA, Karsten, 67677 Enkenbach-Alsenborn (DE); WAGNER, Steffen, 68782 Brühl (DE)
(74) Vertreter: Patentanwälte Bressel und Partner mbB
(86) Internationale Anmeldenummer: PCT/EP2017/079735
(87) Internationale Veröffentlichungsnummer: WO 2018/091701

(56) Entgegenhaltungen:
- EP-A1- 2 570 292
- EP-A1- 2 832 579
- EP-A2- 2 639 097
- DE-A1- 10 218 258
- DE-A1-102015 203 137

## Beschreibung

Die Erfindung betrifft ein elektrisches Netzwerk für ein Schienenfahrzeug, ein Schienenfahrzeug sowie ein Verfahren zum Betreiben des elektrischen Netzwerks.

Es ist bekannt, dass elektrische Netzwerke von Schienenfahrzeugen einen sogenannten Hochvoltabschnitt umfassen. Dieser Hochvoltabschnitt kann beispielsweise über einen Pantographen mit einem Fahrdraht elektrisch verbunden werden, wobei der Fahrdraht ein Hochvoltpotential, beispielsweise 600 V, 750 V, 900 V, 1000 V, 1200 V, 1500 V oder 3000 V, aufweist. Hochvoltpotentiale sind hierbei auch in der DIN EN 50163:2005-07 offenbart. Weiter ist bekannt, dass Fahrzeuge, insbesondere Straßenbahnen, auch einen sogenannten Niedervoltabschnitt aufweisen, wobei ein Niedervoltabschnitt beispielsweise ein Niedervoltpotential von 24 V, 48 V, 72 V, 96 V oder 110 V aufweisen kann. Niedervoltpotentiale sind hierbei auch in der DIN EN 50155 VDE 0155-200:2008-03 und in der DIN EN 60077-1:2003-04 und DIN EN 60077-2:2003-04 offenbart. In einem Niedervoltabschnitt können sogenannte Niedervolt-Verbraucher, beispielsweise Beleuchtungseinrichtungen, Belüftungseinrichtungen und weitere Verbraucher, angeordnet sein.

Der Hochvoltabschnitt und der Niedervoltabschnitt sind in der Regel über einen Gleichspannungswandler elektrisch verbunden. Im Niedervoltabschnitt ist in der Regel ebenfalls eine sogenannte Niedervoltbatterie angeordnet, die Energie zum Versorgen der Niedervolt-Verbraucher speichert. Elektrische Versorgungsleitungen des Niedervoltabschnitts erstrecken sich hier durch alle Wagen des Schienenfahrzeugs, in dem Niedervolt-Verbraucher angeordnet sein können. Um mit dem Niedervolt-Spannungspotential ausreichend Energie zum Betrieb der Verbraucher bereitstellen zu können, sind relativ große Leitungsquerschnitte erforderlich, um den notwendigen Strom zu leiten.

Die DE 10 2012 216 312 A1 offenbart ein Schienenfahrzeug und ein Verfahren zum Betreiben des Schienenfahrzeugs, welches geeignet ist zum Batteriebetrieb und welches eine Zwischenkreisschaltung und eine Batterie umfasst, wobei es Mittel zum Bereitstellen einer Zwischenkreisspannung und Mittel zum Absenken und/oder Anheben der Zwischenkreisspannung zwischen einem ersten und einem zweiten Spannungsniveau umfasst, wobei das zweite Spannungsniveau der Batteriespannung entspricht.

Die WO 2009/010417 A2 offenbart ein elektrisches Antriebssystem, insbesondere für Schienenfahrzeuge. Hierbei ist vorgesehen, dass das elektrische Antriebssystem eine elektrische Antriebseinheit und eine mit der Antriebseinheit unmittelbar oder mittelbar verbundene Energiespeichereinrichtung umfasst, wobei die Energiespeichereinrichtung zumindest einen elektrischen Energiespeicher und zumindest einen elektrochemischen Energiespeicher aufweist.

WO 2015/039871 betrifft eine Energiespeicheranordnung mit einem Energiespeicher, der über einen Tiefsetzsteller und eine Drosseleinrichtung an eine elektrische Energieversorgung anschließbar ist. Weiter weist die Energiespeicheranordnung einen Hochsetzsteller auf.

Die EP 2 570 292 A1 offenbart einen elektrisches Wechselstrom-Fahrzeug.

Die EP 2 832 579 A1 offenbart ein Schienenfahrzeugsystem mit einem Leistungsspeicher. Die EP 2 639 097 A2 offenbart eine Steuereinrichtung und eine elektrisches

Maschinenfahrzeug. Die DE 102 18 258 A1 offenbart eine Energieversorgung zum Betreiben elektrischer Verbraucher eines Reisezugwagens und Treibwagens.

Es stellt sich das technische Problem, ein elektrisches Netzwerk für ein Schienenfahrzeug, ein Schienenfahrzeug sowie ein Verfahren zum Betrieb eines elektrischen Netzwerkes zu schaffen, welche ein Gewicht und ein Installationsaufwand des elektrischen Netzwerks reduzieren und gleichzeitig eine zuverlässige Energieversorgung von Niedervolt-Verbrauchern ermöglichen.

Die Lösung des technischen Problems ergibt sich durch die Gegenstände mit den Merkmalen der Ansprüche 1, 10 und 11. Weitere vorteilhafte Ausgestaltungen der Erfindung ergeben sich aus den Unteransprüchen.

Es ist eine Grundidee der Erfindung, mindestens zwei voneinander verschiedene Hochvoltabschnitte in einem elektrischen Netzwerk eines Schienenfahrzeugs vorzusehen, wobei einzelne Niedervolt-Verbraucher oder Gruppen von Niedervolt-Verbrauchern über Stromrichter aus einem dieser Hochvoltabschnitte mit Energie versorgt werden können. Der Stromrichter kann insbesondere ein Gleichspannungswandler sein. Hierdurch ergibt sich eine dezentrale Versorgung der Niedervolt-Verbraucher, wobei der bisher verwendete Niedervoltabschnitt des elektrischen Netzwerks entfällt.

Vorgeschlagen wird ein elektrisches Netzwerk für ein Schienenfahrzeug. Das Schienenfahrzeug kann insbesondere eine Straßenbahn sein. Allerdings ist es auch möglich, dass das Schienenfahrzeug ein sogenanntes Vollbahnfahrzeug ist. Ein elektrisches Netzwerk kann hierbei ein elektrisches Netz des Schienenfahrzeugs bezeichnen.

Das elektrische Netzwerk kann ein sogenanntes Traktionsnetz des Schienenfahrzeugs umfassen. Weiter kann das elektrische Netzwerk zur elektrischen Energieversorgung von Hochvolt-Verbrauchern und Niedervolt-Verbrauchern dienen.

Das elektrische Netzwerk umfasst einen ersten Hochvoltabschnitt. Der erste Hochvoltabschnitt kann auch als erstes Hochvolt-Teilnetz bezeichnet werden, wobei das erste Hochvolt-Teilnetz Teil des elektrischen Netzwerks ist.

Der erste Hochvoltabschnitt kann insbesondere mindestens eine Stromleitung aufweisen, die ein erstes Hochvoltpotential aufweist. Das erste Hochvoltpotential kann hierbei gegenüber einem Referenzpotential, beispielsweise einem Massepotential des Schienenfahrzeugs oder gegenüber einem Schienenpotential, gemessen werden. Das erste Hochvoltpotential kann beispielsweise in einem Bereich von 600 V bis 3 kV liegen. Insbesondere sind derartige Hochvoltpotentiale als Fahrdrahtspannungen in der DIN EN50163:2005-07 festgelegt. Insbesondere kann das erste Hochvoltpotential gleich 750 V oder 600 V sein. Der erste Hochvoltabschnitt kann insbesondere mit einem externen Energieversorgungsnetz, z.B. über einen Fahrdraht, elektrisch verbindbar sein, beispielsweise über einen Stromabnehmer. Selbstverständlich kann die elektrische Verbindung zwischen dem ersten Hochvoltabschnitt und dem Fahrdraht, also einem externen Energieversorgungsnetz auch über mindestens ein Sicherungselement, beispielsweise ein Leitungsschutzorgan, erfolgen. Somit kann das erste Hochvoltpotential einer sogenannten Fahrdrahtspannung entsprechen.

Es ist jedoch auch möglich, dass der erste Hochvoltabschnitt mit einem Zwischenkreisabschnitt eines elektrischen Netzwerks eines Schienenfahrzeugs verbunden ist, wobei im Zwischenkreisabschnitt ein so genannter Zwischenkreiskondensator angeordnet ist. Hierbei kann das erste Hochvoltpotential das Potential des Zwischenkreises sein. Der Zwischenkreisabschnitt kann z.B. über einen Gleichrichter oder einen Vier-Quadranten-Steller mit einem externen Energieversorgungsnetz verbunden sein. Diese Verbindung kann weiter zusätzlich über einen Transformator erfolgen. Auch kann der erste Hochvoltabschnitt über einen Gleichspannungswandler mit dem Zwischenkreisabschnitt elektrisch verbunden sein.

An den ersten Hochvoltabschnitt können sogenannte Hochvolt-Verbraucher angeschlossen sein. Ein Hochvolt-Verbraucher kann beispielsweise eine Heizeinrichtung sein. Auch kann an den ersten Hochvoltabschnitt ein Stromrichter, insbesondere ein Wechselrichter, zur Bereitstellung von elektrischer Energie für eine Traktionsmaschine des Schienenfahrzeuges angeschlossen sein. Weiter kann an den ersten Hochvoltabschnitt ein weiterer Stromrichter, beispielsweise ein Wechselrichter, zur Bereitstellung von elektrischer Energie für Wechselspannungs-/Wechselstrom-Verbraucher angeschlossen sein.

Somit kann mindestens ein Eingangsanschluss der genannten Elemente mit dem ersten Hochvoltabschnitt elektrisch verbunden oder verbindbar sein. Ein Ausgangsanschluss der genannten Elemente kann elektrisch mit dem Referenzpotential, beispielsweise einem Referenzpotentialabschnitt, verbunden bzw. verbindbar sein.

Weiter umfasst das elektrische Netzwerk mindestens einen Niedervolt-Verbraucher. Vorzugsweise umfasst das elektrische Netzwerk mehrere Niedervolt-Verbraucher oder Gruppen von mehr als einem Niedervolt-Verbraucher. Ein Niedervolt-Verbraucher kann hierbei ein Element bezeichnen, dessen maximal zulässige Versorgungsspannung niedriger als das Hochvoltpotential des ersten Hochvoltabschnitts ist. Insbesondere kann ein maximal zulässiges Versorgungspotential für einen Niedervolt-Verbraucher 24 V betragen. Ein Niedervolt-Verbraucher kann beispielsweise eine Beleuchtungseinrichtung oder Teil einer Belüftungseinrichtung des Schienenfahrzeugs sein. Selbstverständlich kann das Schienenfahrzeug auch noch weitere Niedervolt-Verbraucher umfassen. Weiter umfasst das elektrische Netzwerk mindestens einen Stromrichter. Dieser Stromrichter kann insbesondere zum Anschluss des mindestens einen Niedervolt-Verbrauchers oder einer Gruppe von mehreren Niedervoltverbrauchern dienen.

Der mindestens eine oder mehrere Niedervolt-Verbraucher können an den Niedervoltabschnitt angeordnet sein. Jedoch sind nicht alle Niedervolt-Verbraucher des Schienenfahrzeugs an den Niedervoltabschnitt angeschlossen. Das elektrische Netzwerk kann mehrere Niedervoltabschnitte umfassen, insbesondere ein Niedervoltabschnitt pro Wagen des Schienenfahrzeugs. Der Niedervoltabschnitt kann auch als dezentraler Niedervoltabschnitt bezeichnet werden. An den Niedervoltabschnitt angeschlossene Niedervolt-Verbraucher können elektrisch parallel und/oder in Reihe geschaltet sein. Auch können an den Niedervoltabschnitt logische Schaltungen angeschlossen sein, insbesondere logische Schützschaltungen.

Weiter umfasst das elektrische Netzwerk mindestens einen weiteren Hochvoltabschnitt, wobei der erste Hochvoltabschnitt und der mindestens eine weitere Hochvoltabschnitt über mindestens einen Hochvolt-Gleichspannungswandler elektrisch verbunden sind. Insbesondere können der erste und der weitere Hochvoltabschnitt ohne die elektrische Verbindung über den mindestens einen Hochvolt-Gleichspannungswandler elektrisch voneinander getrennte Hochvoltabschnitte sein. Der mindestens eine weitere Hochvoltabschnitt kann hierbei auch als weiteres Hochvolt-Teilnetz des elektrischen Netzwerks bezeichnet werden. Auch dieser weitere Hochvoltabschnitt kann mindestens eine Stromleitung umfassen. Der weitere Hochvoltabschnitt kann ein weiteres Hochvoltpotential aufweisen. Das weitere Hochvoltpotential kann insbesondere gleich dem ersten Hochvoltpotential sein. Weiter kann das weitere Hochvoltpotential größer als das Niedervoltpotential sein.

Der weitere Hochvoltabschnitt kann, wie nachfolgend noch näher erläutert, auch als stabilisierter Hochvoltabschnitt und somit als stabilisiertes Hochvoltbordnetz bezeichnet werden.

Weiter ist der mindestens eine Niedervolt-Verbraucher und der mindestens eine weitere Hochvoltabschnitt über den mindestens einen Stromrichter verbunden. Mit anderen Worten ist der mindestens eine Niedervolt-Verbraucher über den mindestens einen Stromrichter an den weiteren Hochvoltabschnitt angeschlossen. Somit kann also ein Niedervoltabschnitt, an den der mindestens eine Niedervolt-Verbraucher angeschlossen ist, über den mindestens einen Stromrichter mit dem weiteren Hochvoltabschnitt verbunden sein.

Es ist auch möglich, dass das elektrische Netzwerk mehrere Niedervolt-Verbraucher umfasst, wobei jeder dieser Niedervolt-Verbraucher über jeweils einen Stromrichter mit dem weiteren Hochvoltabschnitt verbunden ist. Alternativ oder kumulativ kann eine Gruppe von mehr als einem Niedervolt-Verbraucher über jeweils einen Stromrichter mit dem mindestens einen weiteren Hochvoltabschnitt verbunden sein. In diesem Fall sind also mehrere Niedervolt-Verbraucher, die elektrisch z.B. in Reihe oder parallelgeschaltet sein können, über einen gemeinsamen Stromrichter mit dem weiteren Hochvoltabschnitt verbunden bzw. an diesen weiteren Hochvoltabschnitt angeschlossen.

Somit ist der mindestens eine Niedervolt-Verbraucher nicht an ein Niedervolt-Bordnetz, des Schienenfahrzeugs angeschlossen. Vielmehr ersetzen der mindestens eine weitere Hochvoltabschnitt sowie der mindestens eine Stromrichter zum Anschluss des Niedervolt-Verbrauchers das Niedervolt-Bordnetz. Hierdurch wird in vorteilhafter Weise ermöglicht, einen Leitungsquerschnitt von elektrischen Leitungen zu reduzieren, da zur Energieversorgung der Niedervolt-Verbraucher aufgrund des Hochvoltpotentials im weiteren Hochvoltabschnitt keine hohen Ströme durch die elektrischen Leitungen des weiteren Hochvoltabschnitts fließen müssen. Hierdurch kann in vorteilhafter Weise ein Gewicht des elektrischen Netzwerks und somit des Schienenfahrzeugs reduziert werden, was wiederum zu einem verringerten Energieverbrauch beim Antrieb des Schienenfahrzeugs führt. Weiter ergibt sich aufgrund der geringeren Leitungsquerschnitte in vorteilhafter Weise eine vereinfachte Installation/Montage des elektrischen Netzwerks im Schienenfahrzeug, insbesondere im Bereich von Wagenübergängen zwischen zwei Wagen des Schienenfahrzeugs, da keine aufwendigen Gelenkübergangspunkte vorgesehen und montiert werden müssen. Weiter ergibt sich in vorteilhafter Weise auch eine zuverlässige Energieversorgung des mindestens einen Niedervolt-Verbrauchers.

In einer weiteren Ausführungsform umfasst das elektrische Netzwerk mindestens eine Hochvolt-Batterie, wobei die mindestens eine Hochvolt-Batterie elektrisch mit dem mindestens einen weiteren Hochvoltabschnitt verbunden ist. Die Hochvoltbatterie kann hierbei von einer sogenannten Traktionsbatterie des Schienenfahrzeugs verschieden sein. So kann das Schienenfahrzeug eine Traktionsbatterie umfassen, wobei die Traktionsbatterie elektrisch mit dem ersten Hochvoltabschnitt verbunden/verbindbar ist.

Eine Nennspannung der Hochvoltbatterie kann gleich dem Hochvoltpotential des mindestens einen weiteren Hochvoltabschnitts sein. Alternativ kann eine Leerlaufspannung der Hochvoltbatterie gleich dem Hochvoltpotential des weiteren Hochvoltabschnitts sein. Die Hochvoltbatterie kann eine aufladbare Batterie sein. Ein Eingangsanschluss der Hochvoltbatterie kann mit dem weiteren Hochvoltabschnitt und ein Ausgangsanschluss der Hochvoltbatterie mit dem Referenzpotential verbunden sein. Elektrische Energie zum Aufladen der Hochvoltbatterie kann hierbei über den Hochvolt-Gleichspannungswandler aus dem ersten Hochvoltabschnitt und/oder aus einem externen Versorgungsnetz bereitgestellt werden.

Der Hochvolt-Gleichspannungswandler kann insbesondere, aber nicht ausschließlich, in dieser Ausführungsform ein aktiver Gleichspannungswandler sein, wobei ein aktiver Gleichspannungswandler über steuerbare Elemente aus einer Eingangsspannung, beispielsweise dem Hochvoltpotential des ersten Hochvoltabschnitts, eine gewünschte Ausgangsspannung, beispielsweise mit dem Hochvoltpotential des weiteren Hochvoltabschnitts, bereitstellen. Hierbei kann es sein, dass die Eingangsspannung zeitlich variiert, wobei der Hochvolt-Gleichspannungswandler eine zeitlich konstante oder annähernd konstante Ausgangsspannung bereitstellt.

Es ist möglich, dass das Hochvoltpotential im ersten Hochvoltabschnitt zeitlich variiert, insbesondere aufgrund einer variierenden Spannung des elektrischen externen Versorgungsnetzes oder bei Verlust des elektrischen Kontakts zu dem externen Versorgungsnetz. In diesem Fall kann jedoch in vorteilhafter Weise aufgrund der Hochvoltbatterie ein zeitlich konstantes Hochvoltpotential im weiteren Hochvoltabschnitt bereitgestellt werden. Daher kann der weitere Hochvoltabschnitt auch als stabilisiertes Hochvoltbordnetz bezeichnet werden.

Hierdurch erhöht sich in vorteilhafter Weise eine Zuverlässigkeit der Energieversorgung von Niedervolt-Verbrauchern, die über mindestens einen Stromrichter an diesen weiteren Hochvoltabschnitt angeschlossen sind.

In einer weiteren Ausführungsform umfasst das elektrische Netzwerk mindestens einen Stromrichter zum Anschluss mindestens eines Niedervolt-Verbrauchers pro Wagen des Schienenfahrzeugs. Selbstverständlich ist es auch möglich, dass das elektrische Netzwerk für einen, mehrere oder alle Wagen des Schienenfahrzeugs jeweils mehr als einen Stromrichter umfasst.

Somit kann in jedem Wagen des Schienenfahrzeugs jeweils ein Stromrichter angeordnet sein. Über diesen Stromrichter kann dann mindestens ein Niedervolt-Verbraucher dieses Wagens an den weiteren Hochvoltabschnitt angeschlossen sein.

Es ist z.B. vorstellbar, dass mindestens ein Niedervolt-Verbraucher oder aber mehrere Niedervolt-Verbraucher auf einer Halteplatte oder in einem Schaltschrank angeordnet ist, wobei diese Halteplatte bzw. der Schaltschrank wiederum in einem Wagen des Schienenfahrzeugs angeordnet ist. In diesem Fall kann auch der mindestens eine Stromrichter auf/an der Halteplatte oder in dem Schaltschrank angeordnet sein.

Weiter ist es vorstellbar, dass das Schienenfahrzeug mehr als einen Wagen, insbesondere bis zu sieben oder bis zu neun Wagen, umfasst.

Durch die Anordnung mindestens eines Stromrichters zum Anschluss von Niedervolt-Verbrauchern pro Wagen ergibt sich in vorteilhafter Weise eine dezentrale Energieversorgung von Niedervolt-Verbrauchern, insbesondere mit einer sogenannten Inseltopologie. Insbesondere wird in vorteilhafter Weise ermöglicht, dass eine elektrische Leitung des weiteren Hochvoltabschnitts in jeden der Wagen des Schienenfahrzeugs geführt werden kann, wodurch, wie vorhergehend erläutert, der reduzierte Leitungsquerschnitt zu einem verringerten Gewicht des elektrischen Netzwerks und somit des Schienenfahrzeugs führt.

In einer weiteren Ausführungsform ist ein Niedervolt-Verbraucher eines Wagens des Schienenfahrzeugs oder eine Gruppe von mehreren Niedervolt-Verbrauchern eines Wagens des Schienenfahrzeugs über den Stromrichter mit dem weiteren Hochvoltabschnitt verbunden. Dies und entsprechende Vorteile wurden vorhergehend bereits erläutert.

In einer weiteren Ausführungsform ist der mindestens eine Stromrichter zum Anschluss des mindestens einen Niedervolt-Verbrauchers ein Gleichspannungswandler. Hierdurch können in vorteilhafter Gleichspannungs-Niedervolt-Verbraucher zuverlässig mit elektrischer Energie versorgt werden.

In einer alternativen Ausführungsform kann ein Stromrichter selbstverständlich auch ein Wechselrichter sein, insbesondere um Wechselspannungs-Niedervolt-Verbraucher an den weiteren Hochvoltabschnitt anzuschließen. Dies ermöglicht wiederum eine zuverlässige Energieversorgung von derartigen Wechselspannungs-Niedervolt-Verbrauchern.

Erfindungsgemäß sind ein Soll-Gleichspannungspotential im ersten und im mindestens einen weiteren Hochvoltabschnitt gleich. Dies kann insbesondere bedeuten, dass ein gewünschtes Gleichspannungspotential im ersten und im mindestens einen weiteren Hochvoltabschnitt gleich sind. Wie vorhergehend erläutert ist es möglich, dass die Hochvoltpotentiale im ersten und im mindestens einen weiteren Hochvoltabschnitt zeitlich variieren. Wesentlich ist jedoch, dass ein Soll-Potential dieser Hochvoltabschnitte gleich ist. Insbesondere kann also auch das Soll-Hochvoltpotential im weiteren Hochvoltabschnitt 750 V oder 600 V betragen. Hierdurch ergibt sich in vorteilhafter Weise kein aufwendiger und verlustbehafteter Betrieb des Hochvolt-Gleichspannungswandlers.

Als nicht zur Erfindung gehörend wird beschrieben, dass es möglich ist, dass die Soll-Gleichspannungspotentiale im ersten und im mindestens einen weiteren Hochvoltabschnitt voneinander verschieden sind.

In einer weiteren Ausführungsform ist das Gleichspannungspotential, also das Hochvoltpotential, im mindestens einen weiteren Hochvoltabschnitt ein stabilisiertes Gleichspannungspotential. Dies kann bedeuten, dass das Gleichspannungspotential im weiteren Hochvoltabschnitt nicht mehr als ein vorbestimmtes Maß von dem gewünschten Soll-Gleichspannungspotential, also dem Soll-Hochvoltpotential, abweicht. Insbesondere kann eine maximal zulässige oder sich maximal einstellende Abweichung des Hochvoltpotentials vom Soll-Potential im ersten Hochvoltabschnitt größer sein als die entsprechende maximal zulässige oder sich maximal einstellende Abweichung im weiteren Hochvoltabschnitt. Wie vorhergehend erläutert, kann dies durch die Anordnung einer Hochvoltbatterie im weiteren Hochvoltabschnitt erfolgen. Alternativ oder kumulativ kann der mindestens eine Hochvolt-Gleichspannungswandler derart betrieben werden, dass das stabilisierte Gleichspannungspotential im weiteren Hochvoltabschnitt bereitgestellt wird.

In einer weiteren Ausführungsform ist der mindestens eine Niedervolt-Verbraucher in einem geerdeten Niedervoltabschnitt angeordnet. Dies kann bedeuten, dass mindestens ein Anschluss des Niedervolt-Verbrauchers, insbesondere ein Ausgangsanschluss, mit dem vorhergehend erläuterten Referenzpotential elektrisch verbunden ist.

Durch die Anordnung eines Niedervolt-Verbrauchers in einem geerdeten Niedervoltabschnitt ergibt sich in vorteilhafter Weise, dass so genannte Erstfehler einfach und zuverlässig erkennbar sind und somit entsprechende Fehlermanagement-Maßnahmen eingeleitet werden können. Dies kann insbesondere bedeuten, dass eine Fehlfunktion eines solchen Niedervolt-Verbrauchers schnell detektiert und durch entsprechend eingeleitete Maßnahmen ein Risiko für die Nutzer und das Bedienpersonal des Schienenfahrzeugs minimiert werden kann.

In einer alternativen Ausführungsform ist der mindestens eine Niedervolt-Verbraucher in einem isolierten Niedervoltabschnitt angeordnet. Dies kann bedeuten, dass keiner der Anschlüsse des Niedervolt-Verbrauchers mit dem Referenzpotential verbunden ist.

Durch die Anordnung eines Niedervolt-Verbrauchers in einem isolierten Niedervoltabschnitt ergibt sich in vorteilhafter Weise, dass eine Erstfehlersicherheit gewährleistet ist.

Grundsätzlich kann die Anordnung eines Niedervolt-Verbrauchers in einem geerdeten oder isolierten Niedervoltabschnitt von dem entsprechenden Betriebsszenario abhängig sein.

In einer weiteren Ausführungsform erstreckt sich mindestens eine elektrische Leitung des mindestens einen weiteren Hochvoltabschnitts in mindestens zwei, vorzugsweise in alle, Wagen des Schienenfahrzeugs. Hierbei ist es vorstellbar, dass sich genau eine elektrische Leitung durch alle oder mehr als einen Wagen des Schienenfahrzeugs erstreckt. Selbstverständlich ist es jedoch auch möglich, dass der weitere Hochvoltabschnitt mehrere elektrische Leitungen umfasst, wobei sich z.B. je eine elektrische Leitung in jeweils einen Wagen des Schienenfahrzeugs erstrecken kann, wobei einzelne elektrische Leitungen sich durch jeweils mehrere, jedoch nicht alle Wagen des Schienenfahrzeus erstrecken können. An die elektrischen Leitungen kann dann jeweils ein Stromrichter des entsprechenden Wagens zum Anschluss von Niedervolt-Verbrauchern des entsprechenden Wagens angeschlossen werden.

Hierdurch ergibt sich in vorteilhafter Weise eine mit reduziertem Gewicht zu realisierende Verkabelung der Niedervolt-Verbraucher in jedem Wagen des Schienenfahrzeugs.

Weiter vorgeschlagen wird ein Schienenfahrzeug mit einem elektrischen Netzwerk gemäß einer der in dieser Offenbarung beschriebenen Ausführungsformen.

Das Schienenfahrzeug kann hierbei einen, vorzugsweise jedoch mehrere, Wagen umfassen. In jedem Wagen kann mindestens ein Niedervolt-Verbraucher angeordnet sein. Weiter ist es möglich, dass in einem der Wagen die Hochvoltbatterie angeordnet ist. Weiter kann in einem Wagen, vorzugsweise im gleichen Wagen wie die Hochvoltbatterie, der Hochvolt-Gleichspannungswandler angeordnet sein. Weiter kann sich mindestens eine elektrische Leitung des mindestens einen weiteren Hochvoltabschnitts in einen der Wagen, durch mehrere, jedoch nicht alle Wagen oder durch alle Wagen des Schienenfahrzeugs erstrecken.

Hierdurch ergibt sich in vorteilhafter Weise ein Schienenfahrzeug mit reduziertem Gewicht der Verkabelung zur Energieversorgung der Niedervolt-Verbraucher und mit reduziertem Installations-Montageaufwand zur Verlegung von elektrischen Leitungen des elektrischen Netzwerks, insbesondere da keine aufwendigen zu konstruierenden Übergangspunkte an den Wagenübergängen für elektrische Leitungen vorgesehen werden müssen.

Weiter vorgeschlagen wird ein Verfahren zum Betrieb eines elektrischen Netzwerks gemäß einer der in dieser Offenbarung beschriebenen Ausführungsformen. Hierbei stellt der mindestens eine Stromrichter eine Niedervolt-Spannung für den mindestens einen Niedervolt-Verbraucher aus dem weiteren Hochvoltabschnitt bereit.

Der Stromrichter zum Anschluss eines Niedervolt-Verbrauchers kann hierbei ein aktiver Stromrichter sein.

Weiter ist es möglich, dass elektrische Energie aus dem weiteren Hochvoltabschnitt in den ersten Hochvoltabschnitt übertragen wird, beispielsweise durch eine geeignete Ansteuerung von steuerbaren Elementen des aktiven Hochvolt-Gleichspannungswandlers. Beispielsweise kann elektrische Energie zum Betrieb einer Traktionsmaschine des Schienenfahrzeugs aus dem weiteren Hochvoltabschnitt in den ersten Hochvoltabschnitt und zur Traktionsmaschine übertragen werden. Ebenfalls ist es möglich, elektrische Energie aus dem weiteren Hochvoltabschnitt in das externe Versorgungsnetz zu übertragen (Rückspeisung). Dies kann ebenfalls durch einen geeigneten Betrieb von steuerbaren Elementen des Hochvolt-Gleichspannungswandlers erfolgen.

Die Erfindung wird anhand eines Ausführungsbeispiels näher erläutert. Die Figuren zeigen:
- Fig. 1: einen schematischen Schaltplan eines erfindungsgemäßen elektrischen Netzwerks und
- Fig. 2: eine schematische Seitenansicht eines Schienenfahrzeugs.

Nachfolgend bezeichnen gleiche Bezugszeichen Elemente mit gleichen oder ähnlichen technischen Merkmalen.

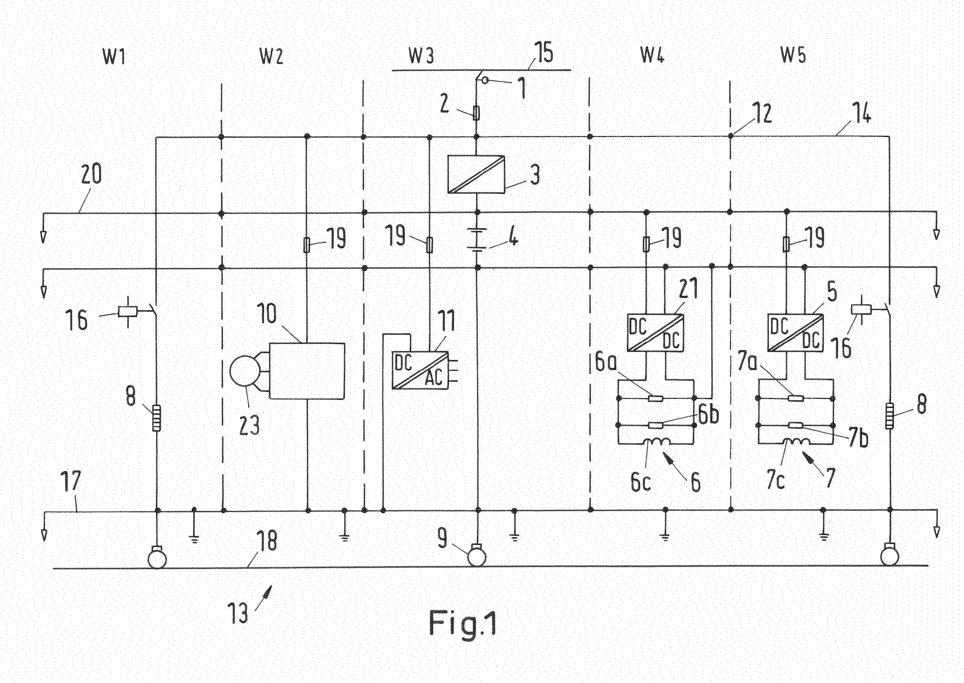

In Fig. 1 ist ein schematischer Schaltplan eines erfindungsgemäßen elektrischen Netzwerks 13 dargestellt. Das elektrische Netzwerk 13 umfasst einen ersten Hochvoltabschnitt 14. Der erste Hochvoltabschnitt 14 ist über ein Sicherungselement 2, beispielsweise ein als Leitungsschutzorgan ausgebildetes Sicherungselement 2, mit dem Stromabnehmer 1 verbunden. Der Stromabnehmer 1 kann einen Fahrdraht 15 kontaktieren, wobei auf dem Fahrdraht ein Hochvoltpotential von beispielsweise 600 V relativ zu einem Referenzpotential eines externen Versorgungsnetzes anliegt. Ein Soll-Hochvoltpotential des ersten Hochvoltabschnitts 14 kann also somit beispielsweise 600 V betragen.

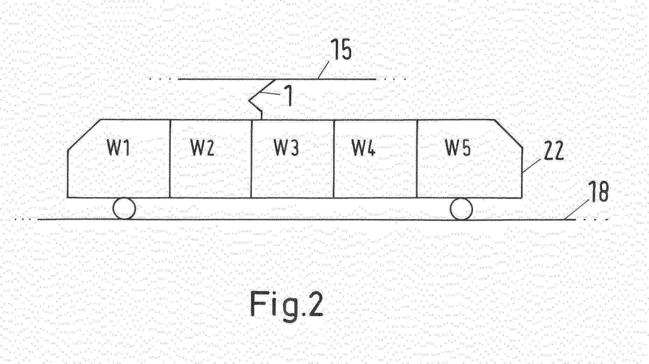

Eingangsanschlüsse von elektrischen Hochvolt-Verbrauchern, insbesondere von Heizeinrichtungen 8, sind über Schaltelemente 16 jeweils mit dem ersten Hochvoltabschnitt 14 verbindbar. Ausgangsanschlüsse der Heizeinrichtungen 8 sind mit einem Referenzpotentialabschnitt 17 elektrisch verbunden. Der Referenzpotentialabschnitt 17 ist über Räderkontakte 9 mit einer Schiene 18, auf dem das Schienenfahrzeug 22 (siehe Fig. 2) fährt, elektrisch verbunden.

Weiter dargestellt ist ein Traktionswechselrichter 10, wobei ein Eingangsanschluss des Traktionswechselrichters 10 über ein Leitungsschutzelement 19, beispielsweise ein so genanntes NH-Sicherungselement, mit dem ersten Hochvoltabschnitt 14 verbunden ist. Ein Ausgangsanschluss des Traktionswechselrichters 10 ist wiederum mit dem Referenzpotentialabschnitt 17 verbunden. Der Traktionswechselrichter 10 stellt eine Wechselspannung zum Betrieb einer Wechselstromantriebsmaschine 23 des Schienenfahrzeugs 22 bereit.

Weiter dargestellt ist ein Wechselrichter 11, wobei ein Eingangsanschluss des Wechselrichters 11 über ein Leitungsschutzelement 19 mit dem ersten Hochvoltabschnitt 14 elektrisch verbunden ist. Ein Ausgangsanschluss des Wechselrichters 11 ist wiederum mit dem Referenzpotentialabschnitt 17 verbunden. Ausgangsanschlüsse eines Wechselspannungsteils des Wechselrichters 11 können mit entsprechenden Wechselrichtern-Verbrauchern elektrisch verbunden sein.

Weiter umfasst das elektrische Netzwerkt 13 einen weiteren Hochvoltabschnitt 20. Der weitere Hochvoltabschnitt 20 ist über einen Hochvolt-Gleichspannungswandler 3, der ein aktiver Gleichspannungswandler sein kann, mit dem ersten Hochvoltabschnitt 14 elektrisch verbunden. Weiter umfasst das elektrische Netzwerk 13 eine Hochvoltbatterie 4, wobei ein Eingangsanschluss (Pluspol) der Hochvoltbatterie 4 mit dem weiteren Hochvoltabschnitt 20 und ein Ausgangsanschluss der Hochvoltbatterie (Minuspol) mit dem Referenzpotentialabschnitt 17 verbunden ist. Der weitere Hochvoltabschnitt 20 kann ebenfalls ein Soll-Hochvoltpotential von 600 V aufweisen.

Es ist ebenfalls möglich, dass die Hochvoltbatterie 4 mit einem nicht dargestellten Batterie-Ausgangsanschluss des Hochvolt-Gleichspannungswandlers 3 verbunden ist. In diesem Fall kann die Hochvoltbatterie 4 intern über den Hochvolt-Gleichspannungswandler 3 oder extern über eine Diode (nicht dargestellt) mit dem weiteren Hochvoltabschnitt 20 verbunden werden.

Weiter umfasst das elektrische Netzwerk 13 einen geerdeten Niedervoltabschnitt 6, wobei der geerdete Niedervoltabschnitt 6 wiederum Niedervoltverbraucher 6a, 6b, 6c umfasst. In dem in Fig. 1 dargestellten Ausführungsbeispiel sind die Niedervolt-Verbraucher 6a, 6b, 6c elektrisch parallel geschaltet. Weiter sind zwei der Niedervolt-Verbraucher als resistive Niedervolt-Verbraucher 6a, 6b und ein Niedervolt-Verbraucher als induktiver Niedervolt-Verbraucher 6c ausgebildet. Dies ist jedoch nur eine exemplarische Ausbildung und Verschaltung der Niedervolt-Verbraucher 6a, 6b, 6c.

Über einen als Gleichspannungswandler ausgebildeten Stromrichter 21 zum Anschluss der Niedervolt-Verbraucher 6a, 6b, 6c ist der erste Niedervoltabschnitt 6 elektrisch an den weiteren Hochvoltabschnitt 20 angeschlossen. Hierbei sind Eingangsanschlüsse des Stromrichters 21 mit dem weiteren Hochvoltabschnitt 20 sowie mit dem Referenzpotentialabschnitt 17 verbunden. Ausgangsanschlüsse des Stromrichters 21 sind mit dem Niedervoltabschnitt 6 verbunden. Weiter ist dargestellt, dass zumindest ein Anschluss der Niedervolt-Verbraucher 6a, 6b, 6c des geerdeten Niedervoltabschnitts 6 elektrisch mit dem Referenzpotentialabschnitt 17 verbunden sind.

Weiter dargestellt ist ein isolierter Niedervoltabschnitt 7, der wiederum Niedervolt-Verbraucher 7a, 7b, 7c umfasst. Die Niedervolt-Verbraucher 7a, 7b, 7c des isolierten Niedervoltabschnitts 7 sind wiederum elektrisch parallel geschaltet. Diese Parallelschaltung ist jedoch nur eine exemplarische Anordnung. Selbstverständlich sind auch andere Verschaltungen der Niedervolt-Verbraucher 7a, 7b, 7c vorstellbar. Der isolierte Niedervoltabschnitt 7 ist über einen weiteren Stromrichter 5 elektrisch mit dem weiteren Hochvoltabschnitt 20 verbunden. Hierbei sind, wie vorhergehend bezüglich des Stromrichters 21 erläutert, Eingangsanschlüsse des weiteren Stromrichters 5 mit dem weiteren Hochvoltabschnitt 20 und dem Referenzpotentialabschnitt 17 verbunden. Ausgangsanschlüsse des weiteren Stromrichters 5 sind mit den Anschlüssen des isolierten Niedervoltabschnitts 7 verbunden. Im isolierten Niedervoltabschnitt ist keiner der Anschlüsse der Niedervolt-Verbraucher mit dem Referenzpotentialabschnitt 17 elektrisch verbunden.

Durch Strichlinien schematisch dargestellt ist eine Trennung des elektrischen Netzwerks 13 zwischen verschiedenen Wagen W1, W2, W3, W4, W5 des Schienenfahrzeugs 22 (siehe Fig. 2). Diese Trennung ist hierbei exemplarisch dargestellt. Hierbei ist dargestellt, dass der geerdete Niedervoltabschnitt 6 mit den entsprechenden Niedervolt-Verbrauchern 6a, 6b, 6c im vierten Wagen W4 des Schienenfahrzeugs 22 angeordnet ist. Ebenso ist der Stromrichter 21 zum Anschluss des geerdeten Niedervoltabschnitts 6 im fünften Wagen W5 angeordnet. Der isolierte Niedervoltabschnitt 7 mit den Niedervolt-Verbrauchern 7a, 7b, 7c sowie der weitere Stromrichter 5 zum Anschluss des isolierten Niedervoltabschnitts 7 ist im fünften Wagen W5 angeordnet. Der Hochvolt-Gleichspannungswandler 3, die Hochvoltbatterie 4 sowie der Hochvolt-Wechselrichter 11 sind im dritten Wagen W3 angeordnet. Der Traktionswechselrichter 10 ist im zweiten Wagen W2 angeordnet. Die Heizeinrichtungen 8 sind im ersten und im fünften Wagen W1, W5 angeordnet.

Weiter ist dargestellt, dass sich der weitere Hochvoltabschnitt 20, insbesondere eine elektrische Leitung des weiteren Hochvoltabschnitts 20 durch alle fünf Wagen W1, ..., W5 des Schienenfahrzeugs 22 erstreckt. Auch der erste Hochvoltabschnitt 14, insbesondere eine elektrische Leitung des ersten Hochvoltabschnitts 14, sowie der Referenzpotentialabschnitt 17, insbesondere eine elektrische Leitung des Referenzpotentialabschnitts 17, erstrecken sich durch alle Wagen W1, ..., W5 des Schienenfahrzeugs 22. Durch Punkte dargestellt sind Wagenübergänge der elektrischen Leitungen.

Der weitere Hochvoltabschnitt 20 ersetzt in Kombination mit den Stromrichtern 5, 21 ein Niedervoltspannungsbordnetz des Schienenfahrzeugs 22. Hierdurch kann ein Leitungsquerschnitt der elektrischen Leitung des weiteren Hochvoltabschnitts 20 reduziert werden sowie die Übergangspunkte zwischen den Wagen W1, ..., W5 einfacher ausgestaltet werden.

Insgesamt ergibt sich somit eine Reduktion des Gewichts der elektrischen Leitungen und somit des Schienenfahrzeugs 22.

Fig. 2 zeigt eine schematische Seitenansicht eines Schienenfahrzeugs 22, welches ein elektrisches Netzwerk 13 gemäß der in Fig. 1 dargestellten Ausführungsform umfassen kann. Ersichtlich ist ein Stromabnehmer 1, der einen Fahrdraht 15 kontaktiert. Weiter ersichtlich sind Schienen 18, auf denen das Schienenfahrzeug 22 fährt. Das Schienenfahrzeug, insbesondere eine Straßenbahn, kann fünf Wagen W1, ..., W5 umfassen. Hierbei kann das elektrische Netzwerk 13 gemäß der in Fig. 1 dargestellten Ausführungsform in diesen fünf Wagen W1, ..., W5 angeordnet sein.

### Bezugszeichenliste

- 1: Stromabnehmer
- 2: Sicherungselement
- 3: Hochvolt-Gleichspannungswandler
- 4: Hochvoltbatterie
- 5: Stromrichter
- 6: geerdeter Niedervoltabschnitt
- 7: isolierter Niedervoltabschnitt
- 8: Heizeinrichtung
- 9: Räderkontakt
- 10: Traktionswechselrichter
- 11: Wechselrichter
- 12: Wagenübergang
- 13: elektrisches Netzwerk
- 14: erster Hochvoltabschnitt
- 15: Fahrdraht
- 16: Schaltelement
- 17: Referenzpotentialabschnitt
- 18: Schiene
- 19: Widerstand
- 20: weiterer Hochvoltabschnitt
- 21: Stromrichter
- 22: Schienenfahrzeug
- 23: Wechselstrom-Antriebsmaschine

## Patentansprüche

1. Elektrisches Netzwerk für ein Schienenfahrzeug (22), wobei das elektrische Netzwerk (13) einen ersten Hochvoltabschnitt (14) umfasst, wobei das elektrische Netzwerk (13) mindestens einen Niedervolt-Verbraucher (6a, 6b, 6c, 7a, 7b, 7c) und mindestens einen Stromrichter (5, 21) umfasst, wobei das elektrische Netzwerk (13) mindestens einen weiteren Hochvoltabschnitt (20) umfasst, wobei der erste Hochvoltabschnitt (14) und der mindestens eine weitere Hochvoltabschnitt (20) über mindestens einen Hochvolt-Gleichspannungswandler (3) elektrisch verbunden sind, wobei der mindestens eine Niedervolt-Verbraucher (6a, ..., 7c) und der mindestens eine weitere Hochvoltabschnitt (20) über den mindestens einen Stromrichter (5, 21) verbunden sind,
**dadurch gekennzeichnet, dass**
ein Soll-Gleichspannungspotential im ersten und im mindestens einen weiteren Hochvoltabschnitt (14, 20) gleich sind.

2. Elektrisches Netzwerk nach Anspruch 1, **dadurch gekennzeichnet, dass** das elektrische Netzwerk (13) mindestens eine Hochvoltbatterie (4) umfasst, wobei die mindestens eine Hochvoltbatterie (4) elektrisch mit dem mindestens einen weiteren Hochvoltabschnitt (20) verbunden ist.

3. Elektrisches Netzwerk nach einem der vorangegangenen Ansprüche, **dadurch gekennzeichnet, dass** elektrische Netzwerk (13) mindestens einen Stromrichter (5, 21) pro Wagen (W1, W2, W3, W4, W5) des Schienenfahrzeugs (22) umfasst.

4. Elektrisches Netzwerk nach Anspruch 3, **dadurch gekennzeichnet, dass** ein Niedervolt-Verbraucher (6a, ..., 7c) eines Wagens (W1, ..., W5) des Schienenfahrzeugs (22) oder eine Gruppe von mehreren Niedervolt-Verbrauchern (6a, ..., 7c) eines Wagens (W1, ..., W5) des Schienenfahrzeugs (22) über den Stromrichter (5, 21) mit dem weiteren Hochvoltabschnitt (20) verbunden ist.

5. Elektrisches Netzwerk nach einem der vorangegangenen Ansprüche, **dadurch gekennzeichnet, dass** der mindestens eine Stromrichter (5, 21) ein Gleichspannungswandler ist.

6. Elektrisches Netzwerk nach einem der vorangegangenen Ansprüche, **dadurch gekennzeichnet, dass** das Gleichspannungspotential im mindestens einen weiteren Hochvoltabschnitt (20) ein stabilisiertes Gleichspannungspotential ist.

7. Elektrisches Netzwerk nach einem der vorangegangenen Ansprüche, **dadurch gekennzeichnet, dass** der mindestens eine Niedervolt-Verbraucher (6a, 6b, 6c) in einem geerdeten Niedervoltabschnitt (6) angeordnet ist.

8. Elektrisches Netzwerk nach einem der Ansprüche 1 bis 7, **dadurch gekennzeichnet, dass** der mindestens eine Niedervolt-Verbraucher (7a, 7b, 7c) in einem isolierten Niedervoltabschnitt (7) angeordnet ist.

9. Elektrisches Netzwerk nach einem der vorangegangenen Ansprüche, **dadurch gekennzeichnet, dass** sich mindestens eine elektrische Leitung des mindestens einen weiteren Hochvoltabschnitts (20) in mindestens zwei Wagen (W1, ..., W5) des Schienenfahrzeugs (22) erstreckt.

10. Schienenfahrzeug mit einem elektrischen Netzwerk (13) nach einem der Ansprüche 1 bis 9.

11. Verfahren zum Betrieb eines elektrischen Netzwerks (13) gemäß einem der Ansprüche 1 bis 9, **dadurch gekennzeichnet, dass** der mindestens eine Stromrichter (5, 21) eine Niedervolt-Spannung für den mindestens einen Niedervolt-Verbraucher (6a, ..., 7c) bereitstellt.

## Claims

1. Electrical network for a rail vehicle (22), wherein the electrical network (13) comprises a first high-voltage section (14), wherein the electrical network (13) comprises at least one low-voltage consumer (6a, 6b, 6c, 7a, 7b, 7c) and at least one power converter (5, 21), wherein the electrical network (13) comprises at least one further high-voltage section (20), wherein the first high-voltage section (14) and the at least one further high-voltage section (20) are electrically connected via at least one high-voltage DC-DC converter (3), wherein the at least one low-voltage consumer (6a, ..., 7c) and the at least one further high-voltage section (20) are connected via the at least one power converter (5, 21), **characterized in that** a target direct voltage potential in the first and in at least one further high-voltage section (14, 20) are the same.

2. Electrical network according to claim 1, **characterized in that** the electrical network (13) comprises at least one high-voltage battery (4), the at least one high-voltage battery (4) being electrically connected to the at least one further high-voltage section (20).

3. Electrical network according to one of the preceding claims, **characterized in that** electrical network (13) comprises at least one power converter (5, 21) per carriage (W1, W2, W3, W4, WS) of the rail vehicle (22).

4. Electrical network according to claim 3, **characterized in that** a low-voltage consumer (6a, ..., 7c) of a carriage (W1, ..., WS) of the rail vehicle (22) or a group of a plurality of low-voltage consumers (6a, ..., 7c) of a carriage (W1, ..., WS) of the rail vehicle (22) is connected via the converter (5, 21) to the further high-voltage section (20).

5. Electrical network according to one of the preceding claims, **characterized in that** the at least one power converter (5, 21) is a DC/DC converter.

6. Electrical network according to one of the preceding claims, **characterized in that** the DC voltage potential in the at least one further high-voltage section (20) is a stabilized DC voltage potential.

7. Electrical network according to one of the preceding claims, **characterized in that** the at least one low-voltage consumer (6a, 6b, 6c) is arranged in an earthed low-voltage section (6).

8. Electrical network according to one of claims 1 to 7, **characterized in that** the at least one low-voltage consumer (7a, 7b, 7c) is arranged in an insulated low-voltage section (7).

9. Electrical network according to one of the preceding claims, **characterized in that** at least one electrical line of the at least one further high-voltage section (20) extends in at least two carriages (W1, ..., WS) of the rail vehicle (22).

10. Rail vehicle with an electrical network (13) according to one of claims 1 to 9.

11. Method for operating an electrical network (13) according to any one of claims 1 to 9, **characterized in that** the at least one power converter (5, 21) provides a low-voltage voltage for the at least one low-voltage consumer (6a, ..., 7c).

## Revendications

1. Réseau électrique pour un véhicule ferroviaire (22), le réseau électrique (13) comprenant une première section haute tension (14), dans lequel le réseau électrique (13) comprend au moins un consommateur basse tension (6a, 6b, 6c, 7a, 7b, 7c) et au moins un convertisseur de courant (5, 21), dans lequel le réseau électrique (13) comprend au moins une autre section à haute tension (20), la première section à haute tension (14) et l'au moins une autre section à haute tension (20) étant reliées électriquement par l'intermédiaire d'au moins un convertisseur continu-continu à haute tension (3), l'au moins un consommateur basse tension (6a, ..., 7c) et l'au moins une autre section haute tension (20) étant reliés par l'intermédiaire de l'au moins un convertisseur de courant (5, 21), **caractérisé en ce que** un potentiel de tension continue de consigne dans la première et dans la au moins une autre section haute tension (14, 20) sont identiques.

2. Réseau électrique selon la revendication 1, **caractérisé en ce que** le réseau électrique (13) comprend au moins une batterie haute tension (4), ladite au moins une batterie haute tension (4) étant reliée électriquement à ladite au moins une autre section à haute tension (20).

3. Réseau électrique selon l'une des revendications précédentes, **caractérisé en ce que** le réseau électrique (13) comprend au moins un convertisseur de courant (5, 21) par voiture (W1, W2, W3, W4, WS) du véhicule ferroviaire (22).

4. Réseau électrique selon la revendication 3, **caractérisé en ce qu'**un consommateur basse tension (6a, ..., 7c) d'une voiture (W1, ..., WS) du véhicule ferroviaire (22) ou un groupe de plusieurs consommateurs basse tension (6a, ..., 7c) d'une voiture (W1, ..., WS) du véhicule ferroviaire (22) est relié à l'autre section à haute tension (20) via le convertisseur de courant (5, 21).

5. Réseau électrique selon l'une des revendications précédentes, **caractérisé en ce que** ledit au moins un convertisseur de courant (5, 21) est un convertisseur continu-continu.

6. Réseau électrique selon l'une quelconque des revendications précédentes, **caractérisé en ce que** le potentiel de tension continue dans ladite au moins une autre section à haute tension (20) est un potentiel de tension continue stabilisé.

7. Réseau électrique selon l'une quelconque des revendications précédentes, **caractérisé en ce que** ledit au moins un consommateur basse tension (6a, 6b, 6c) est disposé dans une section basse tension (6) mise à la terre.

8. Réseau électrique selon l'une quelconque des revendications 1 à 7, **caractérisé en ce que** le au moins un consommateur basse tension (7a, 7b, 7c) est disposé dans une section basse tension isolée (7).

9. Réseau électrique selon l'une quelconque des revendications précédentes, **caractérisé en ce qu'**au moins une ligne électrique de l'au moins une section à haute tension (20) s'étend sur au moins deux voitures (W1, ..., WS) du véhicule ferroviaire.

10. Véhicule ferroviaire comportant un réseau électrique (13) selon l'une quelconque des revendications 1 à 9.

11. Procédé d'exploitation d'un réseau électrique (13) selon l'une des revendications 1 à 9, **caractérisé en ce que** l'au moins un convertisseur de courant (5, 21) fournit une tension basse tension à l'au moins un consommateur basse tension (6a, ..., 7c).
